# EUROPEAN PATENT APPLICATION

(11) **EP 0 665 091 A2**
(43) Date of publication of application: **02.08.1995**
(21) Application number: 95300356.3
(22) Date of filing: 20.01.1995
(51) Int. Cl.: B29C 35/10, B29C 35/06

(54) **Curing line oven**

(30) Priority: 21.01.1994 US 184474
(71) Applicant: THE STANDARD PRODUCTS COMPANY, Cleveland Ohio 44102 (US)
(72) Inventor: Mesnel, Gerard, Carrieres-sur-Seine 78420 (FR)
(74) Representative: Jones, Michael Raymond

(57) **Abstract**

. A continuous extrusion and curing line has a linear hot air curing furnace 10 which includes at least one UHF heating module 24 which is selectively linearly movable along a length of the furnace 10 and, as such, can control curing conditions more satisfactorily than a similar module permanently fixed in the same location.

## Description

This invention relates to a continuous extrusion and curing line for elastomeric materials such as dense cellular or sponge rubber and for thermosetting materials generally. More particularly, the present invention relates to continuous extrusion and hot air curing lines.

Synthetic rubber products such as extruded sealing strips, gaskets and glass run channel are conventionally made in continuous production lines by extruding an uncured or green rubber extrudate into a desired cross-sectional shape and then curing the extrudate by heating the extrudate and maintaining it at an elevated temperature until it is cured. Elevated temperatures are maintained by use of in-line hot air ovens. In some production lines UHF (ultra-high frequency) microwave pre-heaters are used to supply the initial heat for cross-linking, i.e. for curing of the polymeric extrudate. UHF pre-heaters are also known to be combined with other types of curing means such as ballotinies. In this case the UHF preheater can be located before or in a predetermined cut section of the production line.

Where the desired products are dense rubber or cellular rubber products, the conventional use of UHF pre-heaters in combination with hot air is poorly adapted to the successful manufacture of such products. The poor efficiency of UHF pre-heaters at low temperatures requires the use of relatively high temperatures in the hot air tunnel to cure the product. The use of relatively high temperatures drives lubricant from the products and utilizes the hot air oven in an inefficient manner because only a small portion of hot air volume can be recycled. Moreover, UHF energy effectively applies heat to the interior of the extrudate rather than the exterior, and if such heat is applied too early in the process, then undesirable results can occur. For example, where the product is cellular rubber, use of UHF heating too early in the process line leads to excessive and early blowing, with the associated problems of extrusion distortion, collapsing of foam cells or excessive open cells. Use of UHF energy too late in the process leads to lower efficiency of the UHF heating process. Furthermore, optimal power of UHF cannot be used with satisfactory results when it is applied to an extruded product which is not crosslinked at the start of the procedure and, hence, is highly ductile.

Thus, while use of UHF energy to induce blowing and/or to accelerate crosslinking may be useful, one of the difficulties in practice is to balance the process with aggravated conditions when using the cure line to vulcanize different formulations of products. Complex factors must be taken into consideration such as the thermodynamic action of the UHF energy, the phenomenon of ionizing of the carbon atoms forming the plasma polarized by the electric field, and the action of the cross-linking phenomenon continuing until the extrusion is cured.

According to one aspect of the present invention, there is provided a continuous curing line oven which comprises:
a longitudinally-extending hot air furnace with a conveyor device in the interior thereof for conveying an extrudate along a length of the furnace through the interior thereof, and at least one UHF heating module in the interior of the furnace and selectively linearly movable adjacent a length of the conveyor device.

Preferably the oven includes a plurality of UHF heating modules which are each selectively linearly movable adjacent a respective length of the conveyor device and which are placed sequentially along the conveyor device.

More preferably the oven has two UHF heating modules.

According to another aspect of the present invention, there is provided a method of curing a thermosetting material, comprising the steps of:
extruding an uncured thermosettable extrudate,
conveying the extrudate through a hot air furnace by means of a conveying device,
applying convective heat to the extrudate within the furnace,
applying UHF microwave energy to the extrudate, and
applying further convective heat to the extrudate;

wherein the point of application of the UHF microwave energy is selectively positioned along the length of the conveying device.

The method may include an additional step of applying further UHF microwave energy to the extrudate.

Preferably the step of applying, or applying further, UHF microwave energy is carried out by selectively positioning a UHF heating module to optimize a desired parameter.

The present invention allows one to take complex factors such as those mentioned above into consideration and provide a technique for balancing factors to obtain a desired result.

In the method of the present invention, which involves curing an extrudate of a thermosetting material, the extrudate is subjected to convective heat and to UHF energy, the application of UHF energy being applied sequentially with hot air along a line of movement of the extruded material, the UHF energy being applied in a selective and variable position along the movement of extruded material. The UHF cells are selectively movable along the line so that the power released by the cells can be "tuned" to be available at the points where the expansion and cross-linking operations are optimized. Thus, the UHF power can be applied along the line where the activity of blowing agents is most responsive to the UHF power. The present invention thus offers increased process control for improved product quality, more consistent quality control and reduced scrap and therefore an improved economy of process. Preferably, the desired position or positions of UHF energy application is or are selectively determined in a feedback mechanism and in response to certain process parameters such as the temperature, shape, and/or dimensions of the extrudate.

For a better understanding of the present invention and to show how the same may be carried into effect, reference will now be made, by way of example, to the accompanying drawing, in which:-
Figure 1 is somewhat schematic side view/vertical section of a process line which includes a preferred embodiment of oven in accordance with the present invention;
Figure 2 is a cross-sectional view of the extrudate, taken along line 2-2 in Figure 1; and
Figure 3 is a cross-section view of the extrudate, taken along line 3-3 in Figure 1.

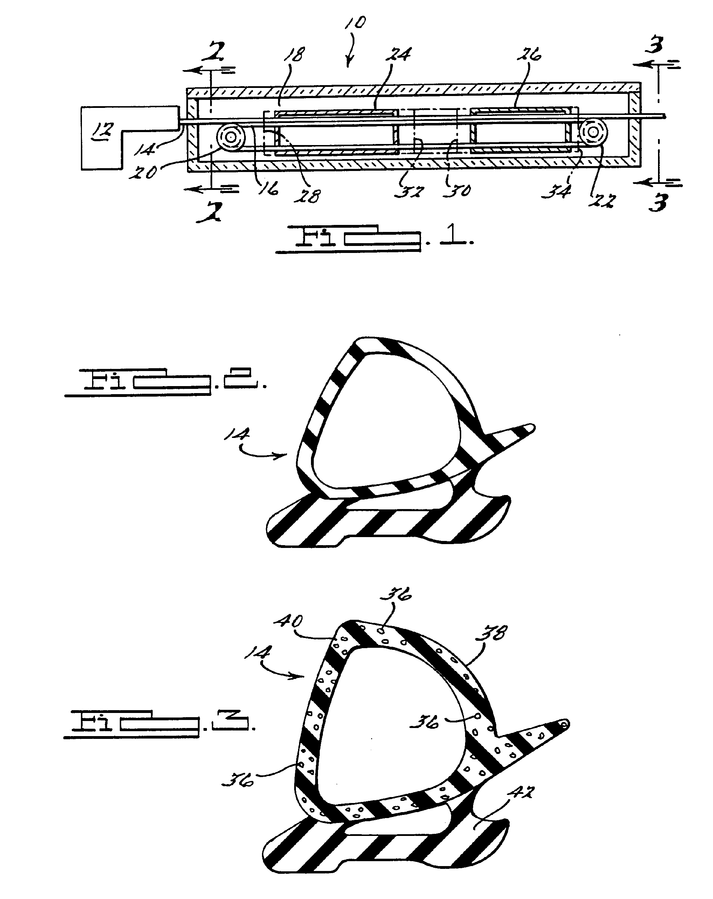

Referring to Figure 1, a curing line oven with variable position in-line UHF heating modules, in accordance with the present invention, is shown and indicated generally by the numeral 10. To the left of the oven 10, as viewed in Figure 1, is an extruder 12 which generates an extrudate 14 and feeds it onto a conveyor belt 16 located in, and for conveying the extrudate into, a hot air oven 18 forming a major part of the overall oven 10.

Extruder 12 can be any desired extruder suitable for producing the selected thermosettable extrudate. Conventional, commercially available extruders are well known in the art. The particular extruder employed in the present invention is not critical so long as the extruder is well adapted to provide an extrudate suitable and desirable for the present purpose.

Conveyor belt 16 is a conventional endless belt supported on driven and undriven rollers 20 and 22. Conveyor belt 16 carries the extrudate 14 downstream of extruder 12 and through the oven 10. The hot air oven 18 can be a convection furnace such as is convention in the art for use as a curing oven. Oven 10 also includes a pair of selectively linearly movable UHF modules 24 and 26 as set forth in more detail hereinafter. Suitable hotairfurnace 18 and UHF modules 24 and 26 are conventional in the art and are commercially available.

UHF modules 24 and 26 are selectively positioned within oven 10. Each UHF module 24 and 26 is independently selectively movable linearly beside the belt 16 leftwardly or rightwardly as viewed in Figure 1. Thus, the module 24 can be moved within a zone indicated by numerals 28 and 30 within the oven 10, and the module 26 can be moved within a zone indicated by numerals 32 and 34 within the oven 10.

By way of example, in operation and in accordance with the method of the present invention, extruder 12 extrudes a thermosetting extrudate 14 which has the initial uncured cross-sectional shape shown in Figure 2. The extrudate 14 is carried into the furnace 18 of the oven 10 immediately after extrusion where it initially is subjected to, and/or attains, a first desired temperature. The extrudate 14 is then contacted by microwave energy from the UHF module 24. Module 24 is selectively linearly positioned relative to the conveyor belt 16 to stabilize the dimension of dense rubber while accelerating generation of cells 36 within the cellular rubber. Following passage through the module 24, the extrudate 14 passes through hot air in the interior of furnace 18 of oven 10 where the skin 38 of the extrudate is further cured. Then, the extrudate 14, now partially cured, passes into module 26 where further UHF energy is applied to the interior thereof. Module 26 is selectively linearly positioned relative to the conveyor belt 16 to accelerate the cross-linking process. The final product has a cellular foam tube 40 and a dense rubber base 42, as shown in Figure 3.

It will be appreciated by those skilled in the art that only one UHF module, or alternatively a plurality of UHF modules may be employed in the present invention as is desired for the particular application and product. Furthermore, the present invention is well adapted for use with a variety of thermoset products.

## Claims

1. A continuous curing line oven which comprises:
a longitudinally-extending hot air furnace with a conveyor device in the interior thereof for conveying an extrudate along a length of the furnace through the interior thereof, and
at least one UHF heating module in the interior of the furnace and selectively linearly movable adjacent a length of the conveyor device.

2. A continuous curing line oven according to claim 1, which includes a plurality of UHF heating modules which are each selectively linearly movable adjacent a respective length of the conveyor device and which are placed sequentially along the conveyor device.

3. A continuous curing line oven according to claim 2, which has two UHF heating modules.

4. A method of curing a thermosetting material, comprising the steps of:
extruding an uncured thermosettable extrudate,
conveying the extrudate through a hot air furnace by means of a conveying device,
applying convective heat to the extrudate within the furnace,
applying UHF microwave energy to the extrudate, and
applying further convective heat to the extrudate;
wherein the point of application of the UHF microwave energy is selectively positioned along the length of the conveying device.

5. A method according to claim 4, including an additional step of applying further UHF microwave energy to the extrudate.

6. A method according to claim 4 or 5, wherein the step of applying, or applying further, UHF microwave energy is carried out by selectively positioning a UHF heating module to optimize a desired parameter.

7. Apparatus which comprises a continuous curing line oven according to any one of claims 1 to 3, and an extruder capable of generating an extrudate and feeding the extrudate to the oven.
